## Europäisches Patentamt

## European Patent Office

## Office européen des brevets

(19)

(11) Numéro de publication: **0 107 568**
**B1**

(12) **FASCICULE DE BREVET EUROPEEN**

(45) Date de publication du fascicule du brevet: **02.09.87**

(51) Int. Cl.⁴: **G 01 N 23/227, H 01 J 47/00**

(21) Numéro de dépôt: **83401971.3**

(22) Date de dépôt: **10.10.83**

(54) Dispositif d'examen d'échantillons par émission électronique.

(30) Priorité: **19.10.82 FR 8217472**

(43) Date de publication de la demande:
**02.05.84 Bulletin 84/18**

(45) Mention de la délivrance du brevet:
**02.09.87 Bulletin 87/36**

(84) Etats contractants désignés:
**CH DE GB IT LI NL**

(56) Documents cités:
**EP-A-0 007 842**

**METALLURGICAL TRANSACTIONS, vol. 8A, juin 1977, pages 899-904, New York, US; W.J. BAXTER: "Exoelectron emission from torsional fatigue damage in hardened steels"**

**LE VIDE, vol. 35, no. 203, septembre/octobre 1980, pages 233-239, Paris, FR; M. PRIOL et al.: "Utilisation d'une tète de diffracteur d'électrons lents avec des multiplicateurs d'électrons-à-microcanaux, pour l'obtention de la répartition energétique des photoélectrons"**

(73) Titulaire: **COMMISSARIAT A L'ENERGIE ATOMIQUE Etablissement de Caractère Scientifique Technique et Industriel 31/33, rue de la Fédération F-75015 Paris (FR)**

(72) Inventeur: **Comby, Georges 13, rue Humbert F-78120 Rambouillet (FR)**

(74) Mandataire: **Mongrédien, André et al c/o BREVATOME 25, rue de Ponthieu F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention est relative à l'examen d'échantillons susceptibles d'émettre des électrons notamment par suite d'une stimulation, provoquée par une excitation notamment thermique ou photonique, en vue de détecter et localiser ces électrons.

Une première application de ce genre d'examen met en oevure certains matériaux échantillons qui émettent, lors d'une stimulation thermique, un flux d'électrons qui peut être utilisé pour mesurer l'intensité d'une excitation spécifique antérieurement subie par l'échantillon. Ces matériaux échantillons sont des convertisseurs en temps différé de phénomènes que l'on veut observer. Par exemple, cette première application concerne l'examen de matériaux convertisseurs utilisés notamment comme dosimètres de radiations employés pour la protection du personnel exerçant son activité dans des zones susceptibles d'être irradiées.

Jusqu'à présent, ces électrons thermostimulés sont détectés et localisés soit à l'aide de dispositifs multiplicateurs d'électrons nécessitant un vide de bonne qualité (channel trons et galettes de microcanaux), soit par intégration dans une chambre d'ionisation, soit par l'emploi de compteurs à multiplication électronique dans des gaz. Ces différents procédés de détection mettent tous en oeuvre des appareillages précis, de fabrication très soignée, délicate et donc coûteuse. De plus, ils ne permettent pas d'analyser des échantillons de grande surface, ni de détecter simplement de façon séparée les exo-électrons émis par plusieurs zones spécialisées du matériau convertisseur.

Une seconde application de ce genre d'examen concerne la localisation de défauts de surface.

Jusqu'à présent, pour connaître la structure, l'homogénéité, la composition, etc., . . ., de surfaces, on utilise diverses méthodes allant de la microscopie optique à la diffraction de rayons X, en passant par l'analyse aux ultra-sons ou la microscopie électronique à balayage. Ces méthodes de haute technicité sont toutefois inaptes à déceler des micro-fissures à leur début, alors que ces dernières peuvent être clairement mises en évidence par excitation photonique qui provoque une émission électronique.

En effet, les modifications cristallines des matériaux soumis à des contraintes diverses s'accompagnent de dislocations qui, à l'échelon macroscopique, jouent le rôle de pièges à électrons et perturbent de façon très locale le niveau de Fermi du matériau. La stimulation optique qui peut être appliquée de façon locale et repérable libère une partie de ces électrons révélant ainsi la présence, en un lieu précis, d'anomalies de surface.

La présente invention a pour but de proposer un dispositif d'examen d'échantillons par émission électronique, notamment stimulée, qui soit simple, n'implique pas de fonctionnement sous vide, soit robuste, puisse examiner commodément des échantillons quelles que soient leurs dimensions, permette une analyse séparée de différentes zones de l'échantillon et constitue un appareil utilisable en milieu industriel et non seulement en laboratoire.

A cet effet, l'invention consiste à appliquer de manière nouvelle une partie d'un "dispositif de détection et de localisation de rayonnements" antérieurement connu, ayant fait l'objet de la demande de brevet europeen EP—A—7842 au nom du même demandeur.

Ce brevet antérieur a pour objet un dispositif de détection et de localisation de rayonnements comprenant dans une enceinte étanche une cathode, une pluralité d'anodes filiformes isolées entre elles et polarisées par rapport à la cathode, et des moyens photosensibles, cette enceinte étanche étant munie d'un hublot transparent aux rayonnements concernés situé en regard de la cathode et des anodes, caractérisé en ce en ce qu'il comprend un support isolant présentant deux faces et dont une partie d'une face, située en regard du hublot, est revêtue d'un matériau conducteur formant un réseau de mailles constituant la cathode, les extrémités des anodes ayant la forme d'une pointe et les axes des anodes coïncidant respectivement avec les axes des mailles du réseau, ces pointes étant situées en retrait par rapport à la face du support isolant qui est revêtue du réseau de mailles conductrices.

On se reportera au texte et au dessin de ce brevet antérieur pour mieux comprendre la structure et le fonctionnement de ce dispositif de détection et de localisation de rayonnements.

L'originalité propre de ce dispositif détecteur réside en ce qu'il est formé d'une matrice de cellules indépendantes, bien qu'il n'y ait pas d'isolement matériel de ces cellules. Cela résulte de la forme de la cathode matricielle et de la position des anodes en forme de pointes en dessous de cette matrice, le support isolant permettant à ce niveau un isolement optique matériel entre les zones multiplicatrices des pointes et entre ces zones et la cathode. Le contrôle approprié des potentiels appliqués sur les différents composants du détecteur permet de créer des lignes de champ électrique permettant cette indépendance fonctionnelle des cellules. L'existence d'une trame conductrice équipotentielle devant le hublot impose une configuration précise des lignes de champs; de ce fait, elle constitue un espace de dérive et de plus, assure la neutralisation des charges positives créées lors des multiplications.

Cette originalité fait apparaître à l'intérieur du détecteur deux zones contiguës et complémentaires liées au phénomène de détection des électrons émis. D'autre part, il existe un espace de dérive des électrons dans la zone située au-delà de la cathode matricielle par rapport aux anodes pointues, et cet espace de dérive est également lui-même bien subdivisé en cellules indépendantes les unes des autres, de sorte qu'un électron généré et détaché dans une cellule de l'espace de dérive restera dans cette cellule, permettant une localisation sans ambiguïté. D'autre part, autour de chaque pointe anodique, se crée une zone de multiplication électronique, intense qui permet la mise en évidence d'un seul électron primaire et qui délivre sur les anodes en pointes des impulsions d'amplitudes importantes et variant peu en fonction de la position de l'électron par rapport à l'anode.

L'invention consiste à mettre à profit ces caractéristiques et performances d'un détecteur multipointes à focalisation cathodique pour en faire un dispositif d'examen d'échantillons par émission électronique stimulée.

A cet effet, l'invention a donc pour objet un dispositif d'examen d'échantillons par émission électronique, caractérisé en ce qu'il comprend dans une enceinte un support isolant dont une partie d'une face est revêtue d'un matériau conducteur formant un réseau de mailles constituant une cathode, une pluralité d'anodes isolées entre elles et polarisées par rapport à la cathode ayant la forme de pointes dont les axes coïncident respectivement avec les axes des mailles du réseau cathodique, ces pointes étant situées en retrait par rapport à la face du support isolant qui est revêtue du réseau de mailles conductrices, ladite enceinte présentant une ouverture disposée au-delà des anodes par rapport à la cathode matricielle, cette ouverture servant de logement aux échantillons à examiner, le dispositif comportant en outre des moyens pour rendre étanche l'intérieur de l'enceinte, des moyens pour remplir cet intérieur étanche de l'enceinte d'un milieu gazeux multiplicateur et des moyens pour appliquer une excitation à l'échantillon.

L'idée de l'invention a été de remarquer que la disposition d'un échantillon conducteur électro-émissif, en lieu et place du hublot doublé d'une trame conductrice, permettait de drainer tous les électrons apparaissant en surface de l'échantillon.

Selon une première application de l'invention, le dispositif d'examen d'échantillons est caractérisé en ce que lesdits moyens d'excitation de l'échantillon sont des moyens d'excitation thermique.

Selon une seconde application de l'invention, le dispositif d'examen d'échantillons est caractérisé en ce que lesdits moyens d'excitation de l'échantillon sont des moyens d'excitation photonique.

Selon une caractéristique particulière, des moyens sont prévus pour remplir l'intérieur étanche de l'enceinte de méthane sous pression atmosphérique.

Selon une autre caractéristique particulière, le dispositif d'examen d'échantillons comporte des moyens pour réaliser et contrôler des déplacements relatifs du dispositif par rapport à l'échantillon.

Selon une autre caractéristique particulière, l'échantillon occupant le logement rend étanche l'intérieur de l'enceinte.

On décrira ci-après, à titre illustratif, deux modes particuliers de réalisation de l'invention en se référant au dessinx annexé sur lequel:

— la figure 1 représente schématiquement en coupe un dispositif selon l'invention pour la détection de thermo-exo-électrons, et
— la figure 2 représente schématiquement en coupe un dispositif selon l'invention pour la localisation de défauts de surface.

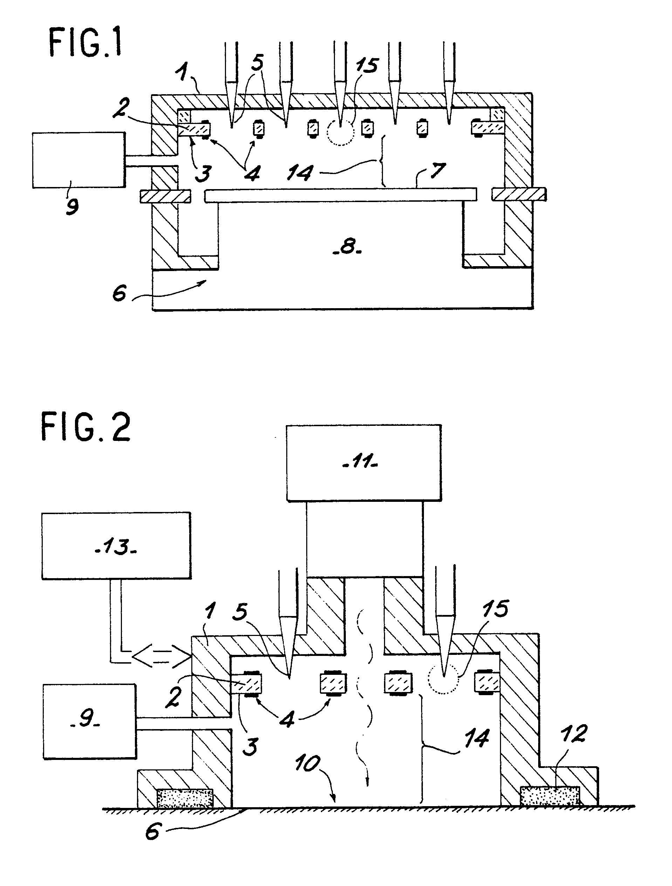

On se reportera d'abord à la figure 1.

Sur cette figure, est représenté schématiquement, un dispositif d'examen d'échantillons thermoexcitables en vue d'émettre des électrons. Le dispositif comprend à l'intérieur d'une enceinte 1, une cathode formée par un support isolant 2 dont une partie de la face 3 est revêtue d'une couche 4 d'un matériau conducteur formant un réseau de mailles constituant la cathode.

Une pluralité d'anodes 5 isolées entre elles ont la forme de pointes dont les axes coïncident respectivement avec les axes des mailles du réseau cathodique 4. Ces anodes pointues 5 sont situées en retrait par rapport au réseau cathodique 4.

L'enceinte présente une ouverture 6 sur sa face au-delà des anodes 5 par rapport à la cathode 4. Dans cette ouverture 6 vient se loger l'échantillon thermo-excitable 7, porté précisément sur un élément de stimulation thermique 8. L'intérieur de l'enceinte 1 est étanche lorsque l'échantillon est en position d'examen, comme représenté sur la figure 1.

Une source 9 de gaz multiplicateur, par exemple du méthane sous pression atmosphérique est prévue pour remplir l'intérieur étanche de l'enceinte 1. On remarquera que si l'on place dans ce dispositif d'examen un échantillon formé de zones juxtaposées de sensibilités différentes à l'irradiation, les signes représentatifs des excitations subies par ces différentes zones pourront être prélevés sur des groupes d'anodes différents correspondant à ces différentes zones.

La figure 2 représente schématiquement un dispositif d'examen d'échantillons photo-excitables en vue d'émettre des électrons.

Sur cette figure, les mêmes numéros de référence que ceux utilisés sur la figure 1 repèrent des éléments identiques que l'on ne décrira pas à nouveau.

Dans ce cas, l'échantillon est constitué par une surface 10 à explorer. Une source de lumière optique 11 permet d'exciter cette surface. Un organe d'étanchéité 12 est prévu entre la base de l'enceinte 1 et la surface 10. Un dispositif 13 permet de repérer la position relative du dispositif d'examen mobile par rapport à la surface à explorer.

On a repéré, sur les figure 1 et 2, l'espace de dérive des électrons 14 mentionné ci-dessus, ainsi que les zones 15 de multiplication électronique en milieu gazeux.

Dans tous les cas, une électrode auxiliaire analogue à l'électron 13 du brevet précité, est utile sur la face du support isolant opposée à celle portant la cathode.

Il est bien évident que les conditions particulières d'applications de l'invention seront choisies en fonction des buts poursuivis. Les paramètres tels que l'intensité et le déroulement dans le temps des excitations thermiques ou photoniques seront choisis de manière appropriée, ainsi que les valeurs des potentiels appliqués aux diverses électrodes.

Dans toute la description précédente, on remarque que l'échantillon occupe l'emplacement du hublot d'observation du dispositif de détection et de localisation de rayonnement de la demande de brevet précitée; sa surface est donc obligatoirement conductrice, afin de constituer une équipotentielle assimilable à la trame conductrice décrite dans ce brevet. Dans le cas où l'échantillon est isolant, il est indispensable de mettre en oeuvre une technique connue, apte à créer cette équipotentielle; par exemple, on peut mélanger un échantillon sous forme divisée, avec un matériau conducteur; on peut déposer une trame conductrice sur l'échantillon, etc.

La description ci-dessus n'est donné qu'à titre d'exemples et bien d'autres réalisations sont aisément envisageables. Par ailleurs, on peut envisager des applications de l'invention dans lesquelles des moyens de stimulation des échantillons soient autres que thermiques ou optiques, même des applications où il n'y a pas, à proprement parler, de moyens de stimulation, les électrons apparaissant spontanément à la surface d'un échantillon, par exemple au cours du processus de décroissance des exo-émissions dues à une triboexcitation.

**Revendications**

1. Dispositif d'examen d'échantillons par émission électronique, caractérisé en ce qu'il comprend dans une enceinte (1) un support isolant (2) dont une partie d'une face (3) est revêtue d'un matériau conducteur formant un réseau de mailles constituant une cathode (4), une pluralité d'anodes isolées entre elles et polarisées par rapport à la cathode ayant la forme de pointes (5) dont les axes coïncident respectivement avec les axes des mailles du réseau cathodique, ces pointes étant situées en retrait par rapport à la face (3) du support isolant qui est revêtu du réseau de mailles conductrices, ladite enceinte présentant une ouverture (6) disposée au-delà des anodes par rapport à la cathode matricielle, cette ouverture servant de logement aux échantillons (7, 10) à examiner, le dispositif comportant en outre des moyens pour rendre étanche l'intérieur de l'enceinte, des moyens (9) pour remplir cet intérieur étanche de l'enceinte d'un milieu gazeux multiplicateur et des moyens (8, 11) pour appliquer une excitation à l'échantillon.

2. Dispositif selon la revendication 1, caractérisé en ce que lesdits moyens d'excitation de l'échantillon (7) sont des moyens d'excitation thermique (8).

3. Dispositif selon la revendication 1, caractérisé en ce que lesdits moyens d'excitation de l'échantillon (10) sont des moyens d'excitation photonique (11).

4. Dispositif selon l'une des revendications 1 à 3, caractérisé en ce que des moyens (19) sont prévus pour remplir l'intérieur étanche de l'enceinte (1) de gaz multiplicateur sous pression atmosphérique.

5. Dispositif selon la revendication 4, caractérisé en ce que le gaz multiplicateur est du méthane.

6. Dispositif selon l'une des revendications 1 à 5, caractérisé en ce qu'il comporte des moyens pour réaliser et contrôler (13) des déplacements relatifs du dispositif par rapport à l'échantillon.

7. Dispositif selon l'une quelconque des revendications 3 à 6, caractérisé en ce que les moyens d'excitation photonique sont constitués d'une source lumineuse (11) solidaire de ladite enceinte et délivrant un pinceau lumineux localisé à travers une ouverture de l'enceinte et une ouverture correspondante dudit support isolant.

8. Dispositif selon la revendication 7, caractérisé en ce que la cathode et les anodes sont disposées selon une symétrie de révolution, autour de l'axe du pinceau lumineux.

**Patentansprüche**

1. Einrichtung zur Untersuchung von Proben durch Elektronenemission, dadurch gekennzeichnet, daß sie in einer Umhüllung (1) enthält: einen isolierenden Träger (2), von dem ein Teil einer Seite (3) von einem Leitermaterial bedeckt ist, der ein Maschengitter bildet, das eine Kathode (4) darstellt, mehrere Anoden, die voneinander isoliert sind und gegenüber der Kathode polarisiert sind und die Form von Spitzen (5) haben, deren Achsen jeweils mit den Achsen der Maschen des Kathodengitters zusammenfallen, wobei diese Spitzen gegenüber der genannten Seite (3) des isolierenden Trägers, die von dem leitfähigen Maschengitter bedeckt ist, zurückgezogen angeordnet sind, wobei die genannte Umhüllung eine Öffnung (6) aufweist, die in bezug auf die Anoden jenseits der Matrixkathode angeordnet ist, wobei diese Öffnung als Aufnahme für die zu prüfenden Proben (7, 10) dient, wobei die Einrichtung weiterhin Einrichtungen zur Abdichtung des Innenraums der Umhüllung, Einrichtungen (9) zum Füllen des dichten Innenraums der Umhüllung mit einem gasförmigen Vervielfachungsmedium und Einrichtungen (8, 11) zur Zuführung einer Erregung zur Probe enthält.

2. Einrichtung nach Anspruch 1, dadurch gekennzeichnet, daß die Einrichtungen zur Erregung der Probe (7) thermische Erregungseinrichtungen (8) sind.

3. Einrichtung nach Anspruch 1, dadurch gekennzeichnet, daß die Einrichtungen zur Erregung der Probe (10) photonische Erregungseinrichtungen (11) sind.

4. Einrichtung nach einem der Ansprüche 1 bis 3, dadurch gekennzeichnet, daß Einrichtungen (9) zum Füllen des dichten Innenraums der Umhüllung (1) mit einem Vervielfachungsgas unter Atmosphärendruck vorgesehen sind.

5. Einrichtung nach Anspruch 4, dadurch gekennzeichnet, daß das Vervielfachungsgas Methan ist.

6. Einrichtung nach einem der Ansprüche 1 bis 5, dadurch gekennzeichnet, daß sie Einrichtungen (13) zur Ausführung und Steuerung von Verschiebungen der Einrichtung gegenüber der Probe enthält.

7. Einrichtung nach einem der Ansprüche 3 bis 6, dadurch gekennzeichnet, daß die photonischen Erregungseinrichtungen von einer Lichtquelle (11) gebildet sind, die fest mit der Umhüllung verbunden ist und ein Lichtbündel abgibt, das durch eine Öffnung in der Umhüllung und eine entsprechende Öffnung des isolierenden Trägers fällt.

8. Einrichtung nach Anspruch 7, dadurch gekennzeichnet, daß die Kathode und die Anoden drehsymmetrisch um die Achse des Lichtbündels angeordnet sind.

**Claims**

1. A device for the examination of samples by electronic emission, characterized in that it comprises, within an enclosure (1), an insulating support (2), a portion of one face (3) of which is covered with a conductive material forming a network of meshes constituting a cathode (4), a plurality of anodes which are insulated from one another and which are polarized in relation to the cathode having the form of tips (5), the axes of which coincide with the axes of the meshes of the cathode network respectively, these tips being situated so as to be set back relative to the face (3) of the insulating support which is covered with the network of conductive meshes, the said enclosure exhibiting an opening (6) disposed beyond the anodes in relation to the matrix cathode, this opening serving to accommodate the samples (7, 10) to be examined, the device further comprising means for sealing the interior of the enclosure, means (9) for filling this sealed interior of the enclosure with a gaseous multiplier medium and means (8, 11) for applying an excitation to the sample.

2. Device according to Claim 1, characterized in that the said means for exciting the sample (7) are means for thermal excitation (8).

3. Device according to Claim 1, characterized in that the said means for exciting the sample (10) are means for photon excitation (11).

4. Device according to one of Claims 1 to 3, characterized in that means (19) are provided for filling the sealed interior of the enclosure (1) with multiplier gas under atmospheric pressure.

5. Device according to Claim 4, characterized in that the multiplier gas is methane.

6. Device according to one of Claims 1 to 5, characterized in that it comprises means (13) for effecting and monitoring relative displacements of the device in relation to the sample.

7. Device according to any one of Claims 3 to 6, characterized in that the means for photon excitation are formed by a light source (11) which forms a solid unit with the said enclosure and which supplies a localized pencil of light through an opening of the enclosure and a corresponding opening of the said insulating support.

8. Device according to Claim 7, characterized in that the cathode and the anodes are disposed in accordance with a symmetry of revolution, about the axis of the pencil of light.

FIG.1

FIG.2